# EUROPEAN PATENT SPECIFICATION

(11) **EP 2 440 337 B1**
(45) Date of publication and mention of the grant of the patent: **20.03.2013**
(21) Application number: 10728278.2
(22) Date of filing: 09.06.2010
(51) Int. Cl.: B07B 1/48, B07B 4/02, B07B 9/00, B07B 13/00, B07B 13/08

(54) **WASTE SCREENING APPARATUS AND METHODS**
VORRICHTUNG UND VERFAHREN ZUR ABFALLSICHTUNG
APPAREILLAGE ET PROCÉDÉS DE TRI DE DÉCHETS

(30) Priority: 09.06.2009 GB 0909857; 04.03.2010 GB 201003570
(43) Date of publication of application: 18.04.2012
(73) Proprietor: Waste Systems Limited, Plumbridge, Tyrone BT79 8EQ (GB)
(72) Inventor: WARD, Patrick, Plumbridge Tyrone BT79 8EQ (GB)
(74) Representative: Earnshaw, Geoffrey Mark
(86) International application number: PCT/GB2010/050965
(87) International publication number: WO 2010/142986

(56) References cited:
- EP-A2- 0 303 034
- DE-A1- 2 158 128
- DE-A1- 10 205 064
- DE-C1- 3 821 689
- US-A- 3 378 142

## Description

The present invention relates to waste screening apparatus and methods, particularly but not exclusively for screening waste material streams for recycling and the like. Also described is an apparatus for separating portions or fractions of a waste material stream, generally to facilitate recycling of one or more of said fractions, and a method therefor; and combinations of same. Devices and methods of related art are described in documents

DE-3821689 and US-3378142.

Waste material streams can relate to all types of material, including waste building rubble from demolition and construction sites. Such rubble can provide a useful source of inert 'heavy' aggregates for use or reuse in the construction industry following separation of unwanted waste materials such as wood, metal, plastics and fines. Fines are generally defined as comprising materials having a particle diameter of less than about 100mm. Some separators are able to recycle up to 99% of construction and demolition waste as raw material for road building and the concrete industry.

Naturally, the recycler wishes to achieve best 'quality' recycled products, in particular for the most commercially useful 'heavies' product stream. This is both in terms of size grading and quality grading, in particular reduced contaminant content. With reduced contaminant content, there is more reassurance for further reuse of the heavies product stream, or it can be increasingly downgraded for easier subsequent disposal.

Apparatus for dealing with and separating waste materials are well known in the art, and can include a number of separators, decks and conveyor belts in a particular arrangement to create one or more sieving actions or regions therebetween.

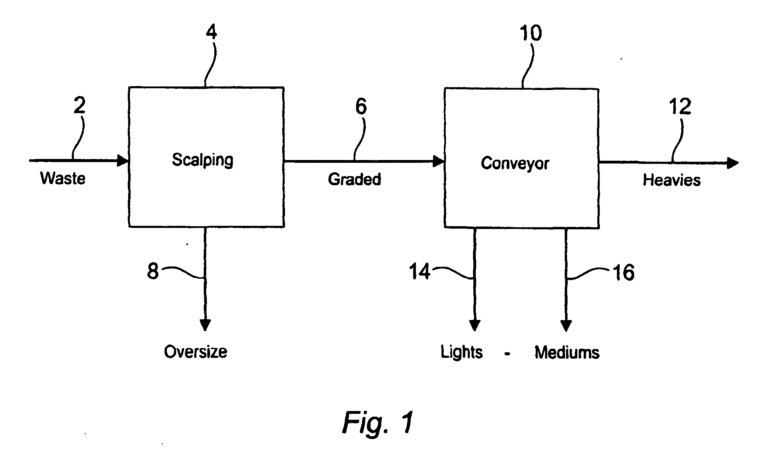

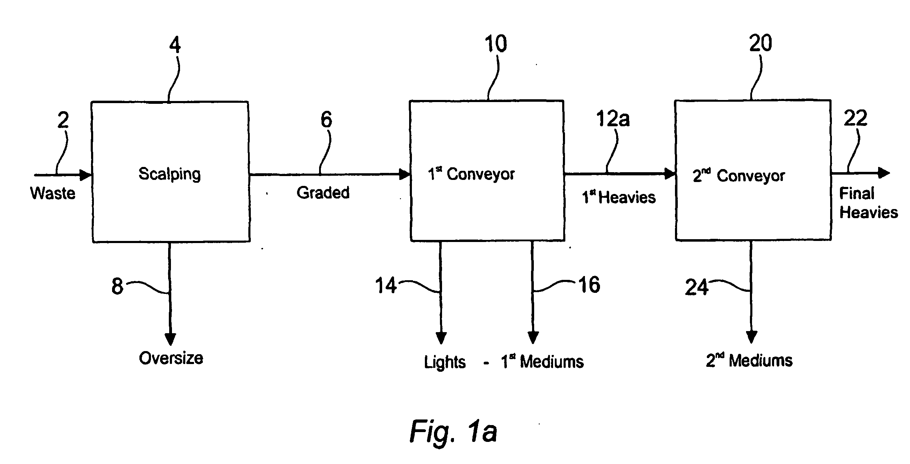

Figure 1 of the accompanying drawings is a schematic flow chart of a conventional waste separation process. The initial sorting step for incoming waste material 2 is usually termed 'scalping' 4, generally being the separation of oversize material (e.g. >60-100+ mm) to provide an oversize stream 8 and a predominately finer graded stream 6. It is the very first cut of the unsorted and ungraded incoming waste material 2. Scalping can also clean the incoming material from clear foreign body contamination such as twigs, trash, glass, or other unwanted oversize material.

After the initial scalping, there is typically a screening apparatus generally having a number of screening mats which move in order to assist the screening process. This can be carried out by a first conveyor 10 to provide a 'heavies' stream 12, a predominately 'lights' stream 14 with some 'medium' material, and sometimes a separate 'mediums' stream 16. As is known in the art, there is no strict delimitation between the nature of materials in each of such lights, mediums and heavies streams, and each stream can, and often does, have a portion of material or materials that would generally be deemed to be classified as belonging to another stream. Recycling waste streams such as building rubble and the like cannot be exact.

Thus, the remaining (or continuing) presence of some 'lights' and 'mediums' materials in the heavies stream is defined as 'contamination', i.e. materials that are generally not desired to remain in the heavies stream. Such 'contaminants' may prevent or hinder the heavies stream from its intended use or reuse, or its subsequent disposal as a lower or lowest grade category material.

Also, the increasing amount of waste materials that are not 'ideal', such as being damp or wet or of awkward shape, have required screening machines with more complex arrangements to prevent clogging of the screening mats. Clogging is commonly the result of the smallest or finest fines, such as material in the range 0-10mm.

US7114620 discloses a screening machine comprising a screen frame elastically supported on a fixed base, a driver oscillating the screen frame, elastic rubber blocks, thrust rods and at least two screening surfaces, in order to create a particular motion of its screen frame. However, such screening machines also need to be particularly robust in use, especially with waste materials that are damper and/or wetter and liable to clog the screen frame, and the greater the complexity of the screening machine components such as those in US7114620, the greater risk of the breakage of one single component stopping the complete screening machine. Another screening machine is described in DE 3821689 C1.

It is an object of the present invention to provide a simpler screening apparatus and method, being more robust in use.

Thus, according to a first aspect of the present invention, there is provided a screening apparatus comprising:
(a) a first screen frame comprising at least two sides and a plurality of first cross members thereinbetween;
(b) a second screen frame comprising at least two sides and a plurality of second cross members thereinbetween, the second cross members being laterally interspaced with the first cross members;
(c) a plurality of flexible screen mats located between at least some of the first cross members and adjacent second cross members;
(d) a first driver to cause the first screen frame and first cross members to oscillate; and
(e) a second driver to cause the second screen frame and second cross members to oscillate;
wherein the second driver is independent to the first driver, and the first driver is asynchronous with the second driver.

In this way, the flexible screen mats are caused to have two movements or motions, one from their attachment to a first cross member, and one from their attachment to a separate second cross member. These movements are provided independently to the screen mats from the separate first and second drivers.

According to the present invention, the first driver is asynchronous with the second driver, thus causing the screen mats to undergo asymmetric movement, further preventing or reducing the likelihood of them becoming clogged or blocked by material being screened. In particular, the separate driving actions of the first and second drivers causes the flexible screen mats to oscillate and/or vibrate and/or flex, and/or relax, and/or tension in a variety of ways and directions.

The term 'asynchronous' as used herein relates to the first driver not being synchronised with the second driver. Such non-synchronisation may be in terms of one or more group comprising: timing, frequency, phase, position, speed, displacement, torque. In this way, the movement of the first cross members is in one or more ways different to the movement of the second cross members over time, (allowing for any possible accidental synchronisation where phases or positions, etc momentarily overlap), in a purposeful manner as driven by the first and second drivers.

The term 'oscillate' as used herein relates to movement in any number of degrees of movement of directions, not limited to one-dimension, but generally such that the frames return to their original position regularly. The term includes any vibrational movement, being in cycle or more usually out of cycle with the other oscillating fame.

The screening apparatus is able to be used for screening many types of material, particularly waste materials that are increasingly being 'recycled' for various reasons or processes, to generally create two or more different separated streams of material from a first mixture and/or variable size range of materials. This can include raw, semi-finished and finished materials, such as clays, sands, wood, woodchips, coal, peat, scrap materials, compost, ash and many others known in the art. The present invention is not limited by the nature of the material to be screened, and the skilled man is aware of the suitability of different screening apparatus for different purposes.

The present invention is not limited to the nature of the flexible screen mats, such as their dimensions, nature and composition, and in particular their screen 'size', generally being the size of the holes in the screen mats. The nature and provision of flexible screen mats is known in the art, as is possible forms of attachment of flexible screen mats to supporting cross members.

The first screen frame may be any suitable arrangement, generally comprising two parallel sides, and usually supported on a fixed or moveable base. Preferably, the sides of the first screen frame also wholly or partly form sides of the screening region of the screening apparatus, and in particular the defined widths of the flexible screen mats. The ends of the first sides of the first screen frame may also define the general entry area of the material to be screened by the screening apparatus, and the general exit area of the non-screened fraction of material.

The screening apparatus provides a first screened fraction (that has passed through the screen mats), and a second non-screened fraction (that remains above the screen mats). Depending upon the use of the screening apparatus, it may be that the first screened fraction or the second fraction, or both fractions, is or are the desired material(s). For example, where the screening apparatus is removing 'fines' or fine material, which would be the first screened material, it is the second non-screened fraction that is generally desired for further processing thereafter.

The first cross members may have any suitable size, shape and composition, generally being a series of steel bars or rods, to which one or more flexible screen mats can be conjoined.

The second screen frame of the screening apparatus of the present invention may be of any suitable size, shape or design, generally comprising two sides parallel with the two sides of the first screen frame. Optionally, the sides of the second screen frame are parallel with the sides of the first screen frame, and are laterally outwith the sides of the first screen frame.

The second screen comprises a plurality of second cross members which again may be of any suitable size, shape or design, again generally being a series of steel rods or bars.

The first and second screen frames may have any suitable arrangement able to allow the second cross members to be laterally interspaced with the first cross members. One non-limiting example is for the first screen frame to have a series of apertures, through which the second cross members pass.

Optionally, the first and second frames are conjoined, preferably elastically or in another cushioned manner, for example using biasers or mounts or blocks thereinbetween.

The second cross members preferably have freedom to move independently of the first screen frame and the first cross members, such that the main driving action on each frame is still the related driver.

The screening apparatus may have any number of flexible screen mats located between at least some of the first cross members and adjacent second cross members. Generally, the screening apparatus has flexible screen mats adapted to extend wholly or substantially from one end of the screening apparatus to the other, with the first and the last flexible screen mats optionally attached to end cross members possibly adapted for the entry and exit of material streams.

The first driver may comprise any suitable apparatus, unit or device able to provide a drive or driving action to the first screen frame in order to cause oscillating movement thereof. The first driver may be directly or indirectly coupled to the first screen frame, and may comprise one or more drive shafts driven by a suitable motor or the like.

The screening apparatus may further comprise one or more first biasers of the movement of the first screen frame by the first driver. Such biasers may be any suitable apparatus, unit or device, such as eccentric weights, springs, dampeners, offset axles, bearings, pneumatic mechanisms, etc., able or adapted in some way to influence either the first driver directly or the action of the first driver to or on the first screen frame, generally to cause offset, off centre, unbalanced or otherwise eccentric motion of the first cross members.

By way of example only, one first biaser may be a weight eccentrically located on a drive shaft of the first driver, so as to cause eccentric action of the drive shaft on the first frame.

The second driver may be the same or different to the first driver. The second driver may have one or more components, features, functions or aspects which are the same or similar to those of the first driver, and/or which are different to those of the first driver.

The second driver may be directly or indirectly coupled to the second screen frame.

Preferably, the screening apparatus further comprises one or more second biasers of the movement of the second screen frame by the second driver. One or more of the second biasers may be the same or different to one or more first biasers described herein above.

In one embodiment of the present invention, one or more of the first biasers are adjustable, such that a change in one or more of the first biasers changes the action of the first driver on the first screen frame, and thus the movement of the flexible screen mats.

Similarly, in another embodiment of the present invention, one or more of the second biasers are adjustable, such that a change in one or more of the second biasers changes the action of the second driver on the second screen frame, and thus the movement of the flexible screen mats.

In this way, the present invention is able to provide alteration of the movement of the flexible screen mats by the adjustment of either the first driver, or the second driver, or both. This provides a number of advantages including, but not limited to, significantly greater adjustment or range of adjustments of the flexible screen mat movement, for example for different materials being screened by the screening apparatus, and a significantly greater ability of the screening apparatus to reduce and/or prevent clogging of the flexible screen mats, either by a regular cleaning motion or movement, or by the regular changing of the movement to help dislodge material 'stuck' or otherwise clogging the flexible screen mats.

The actions of the first and second drivers may be coordinated or uncoordinated, resulting in a range of possible movements of the flexible screen mats not achievable by any prior art screening machines having only one driver.

Preferably, the actions of the first and second drivers are different, that is different to each of the first and second frames, resulting in different relative motions or movements of the first and second cross members, and so asymmetric movement of the screen mats. In particular, positive reaction to cause active tensioning and relaxing of the screen mats.

The screening apparatus may be able to convey material along it at different speeds based on varying one or more of the operable parameters such as driver or motor speeds, power, etc.

The screening apparatus is particularly useful for the separation of 'fines' material, usually being smaller than any lights fraction or stream, more particularly the smallest fines such as in the 0-10mm or 0-20mm gradings. Such fines can particularly clog up later operations or machinery in a separation process, such that their early removal can assist a more general or bigger separation process.

According to a second aspect of the present invention, there is provided a method of screening material such as waste material using a screening apparatus as defined in hereinabove, comprising at least the steps of:
(i) operating the first driver of the first screen frame to oscillate the first screen frame;
(ii) operating the second driver to oscillate the second screen frame;
(iii) conveying a material stream across the flexible screen mats to provide a first screened fraction and a second non-screened fraction.

The screening apparatus and method of the present invention is useable on its own, or in combination with one or more other separating and/or screening apparatus and methods.

For example, such a screening apparatus could be in combination with apparatus for separating fractions of a waste material stream, said apparatus for separating fractions comprising;
(i) a first conveyer for conveying the waste material stream from an inlet region to a first separating region;
(ii) a second conveyer for conveying a first heavy fraction of the waste material stream from the first separating region to a second separating region; and
(iii) at least one blower for passing an air stream through said second separating region to increase the separation of lighter components of the first heavy fraction of the waste material stream on the second conveyer passing towards a second light fraction collector.

As discussed hereinabove, it is important to remove as far as possible 'lights', being the light or lighter material fractions or components such as wood, paper, plastics and materials and so on, from heavy or heavier material fractions or components, to form an increasingly non- or reduced-contaminated heavies product stream.

Optionally, the apparatus for separating fonctions further comprises
(iv) at least one suction means above the second separating region.

The blower (s) and suctions means increase the separation of lighter components of the first heavy fraction of the waste material stream on the second conveyer, passing them towards a suitable collector such as a second light fraction collector. In this way, the blower(s) and suction means are able to increase the overall proportion of lighter components separated out of the waste material stream from typically 70-80% to over 90% or even over 95-99%, and reduce the amount of contaminants in the heavy or heavies stream created at the end of the second conveyor.

Optionally, the first conveyor is the screening apparatus as described above.

Alternatively or additionally, the screening apparatus as described above is located upstream of the first conveyor, to help reduce the amount of fines material prior to the fraction screening described.

The present invention encompasses all combinations of various embodiments or aspects of the invention described herein. It is understood that any and all embodiments of the present invention may be taken in conjunction with any other embodiment to described additional embodiments of the present invention. Furthermore, any elements of an embodiment may be combined with any and all other elements of any of the embodiments to describe additional embodiments.

According to an embodiment of the present invention, there is provided a combined method of separating fractions of a waste material stream using the apparatus as defined herein before comprising at least the steps of:
- operating the first driver of the first screen frame to oscillate the first screen frame;
- operating the second driver to oscillate the second screen frame;
- conveying a waste material stream across the flexible screen mats to provide a first screened fraction and a second non-screened fraction;
- conveying the second fraction from an inlet region to a first separating region on a first conveyer;
- passing the second fraction from the end of the first conveyer through the first separating region to provide at least one first light fraction and at least one first heavy fraction;
- conveying at least one first heavy fraction of the waste material stream along a second conveyer towards a second separating region;
- passing the at least one first heavy fraction through a second separating region at the end of the second conveyer to provide at least one second light fraction and at least one second heavy fraction; and
- passing an air stream from one or more blowers to one or more suction means through the second separating region to help remove lighter components of the waste material stream from the second heavier fraction.

According to another embodiment of the present invention, there is provided a method of separating a waste material comprising at least the steps of;
- scalping the waste material to provide a waste material stream; and
- using the steps of one or more of the methods as defined herein before on the waste material stream to provide a final heavy stream from the end of the second conveyor.

Preferably, this method comprises at least the steps of:
scalping the waste material stream to provide at least a graded stream; passing the graded stream through a method of screening material as described herein to provide a first heavies stream and a lights stream and/or a first medium stream; and
passing the first heavies stream through a method of separating fractions as described herein involving a second conveyor and second separation region, to provide at least a second or final heavies stream and a medium stream, preferably a second medium stream.

Each and every method described herein provides a waste separation process, either as one or more parts of such a process or as a complete process.

Embodiments of the apparatus and methods as described above are further described further hereinbelow, and may be incorporated herewith.

Embodiments of the present invention will now be described by way of example only, and with reference to the accompanying drawings in which:
Figure 1 is a schematic flow chart of a conventional waste separation process;
Figure 1a is a schematic flow chart of a waste separation process according to one embodiment of the present invention;
Figure 2 is a diagrammatic scheme of the waste separation process of Figure 1 a;
Figure 3 is a side part-sectional view of apparatus for separating fractions of a waste material stream;
Figure 4 is an end view of the fourth conveyer and revolving drum of Figure 3;
Figure 5 is an enlarged view of the fourth conveyer and revolving drum shown in Figure 3;
Figure 6 is a plan view of a first screening apparatus according to an embodiment of the present invention;
Figure 7 is a side view of a second screening apparatus according to another embodiment of the present invention;
Figure 8 is a side view of a second screen frame in the second screening apparatus in Figure 7; and
Figure 9 is a side view of a first screen frame in the screening apparatus in Figure 7.

Referring to the drawings, Figure 1 is a schematic flow chart of a conventional waste separation process as described hereinabove. An incoming waste material stream 2, such as of construction or demolition material, generally formed from an ungraded combination of construction materials being of different sizes, shapes, densities, etc., of glass, plastics, stone, concrete, etc., is passed into a scalping section 4 known in the art, which can remove a predetermined 'oversize' stream, such as being greater than a certain predetermined size such as 60mm or 100mm, generally through a series of screens or meshes. The scalping section 4 also provides a 'graded' stream 6 which passes to a first screening section 10, which is able to provide a heavies stream 12 and a lights/mediums stream 14, sometimes a separate mediums stream 16.

Figure 1a shows a schematic flow chart of a waste separation process according to one embodiment of the present invention, wherein the first heavies stream 12a from the first separating section 10 of Figure 1 is subsequently provided to a second conveyor 20, at the end of which can be provided a second or final or product heavy stream 22, and another, optionally second, mediums stream 24. In this way, more lights and mediums have been removed from the first heavies stream 12, to provide a better graded and reduced contaminant containing final heavies stream 22, as a better product stream from the recycling process.

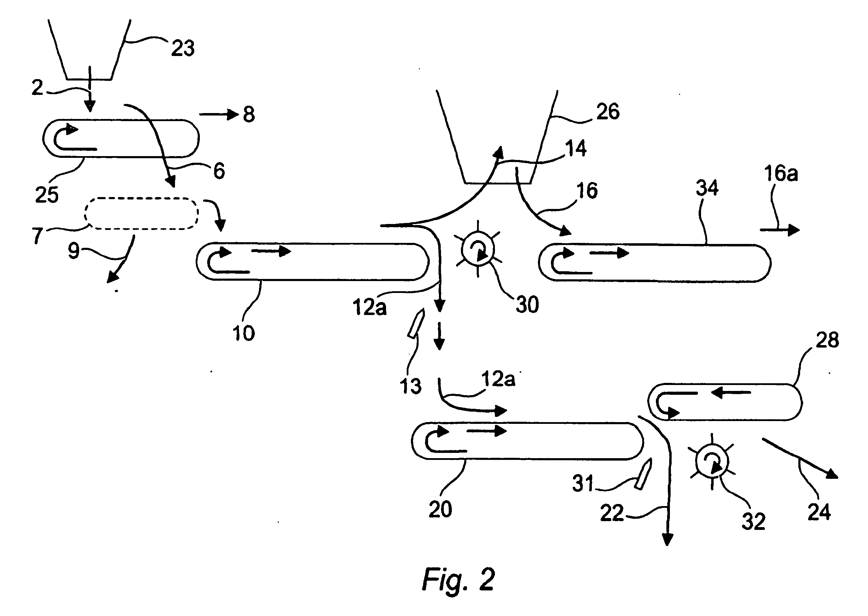

Figure 2 shows a diagrammatic scheme of waste process apparatus and a waste separation process according to further embodiments of the present invention.

Figure 2 shows a waste hopper 23 for the introduction of the initial waste stream 12, which passes onto a scalping conveyor 25 known in the art, through which the graded stream 6 can pass, and the oversized stream 8 can be separated and disposed of separately.

Optionally, the graded stream 6 passes through a screening apparatus shown as dashed line 7 in Figure 2, and being such as the first or second screening apparatus 102, 142 as described hereinafter, to reduce the fines material (stream 9) in the graded stream 6, prior to reaching the first conveyor 10.

Alternatively, the graded stream 6 can pass directly on to a first conveyor 10.

At the end of the first conveyor 10 is a first air blower 13 and a first revolving drum 30 help to create a lighter fraction that can be passed therefrom into a cyclone 26 to create a first lights/medium stream 16 which can be passed onto a separate third conveyor 34 for disposal as a second disposal stream 16a; and a first heavies stream 12 which falls onto a second conveyor 20.

At the end of the second conveyor 20 is a second separation region involving a second air blower 31 which passes an air stream across the separate region towards a suction means 28 being a fourth suction conveyor, and a revolving unit such as a second revolving drum 32. The combination of the air stream and suction of the suction means 28 create a second medium stream 24, which may optionally be combined with the first medium stream 16a for subsequent disposal; and a second or final heavies stream 22.

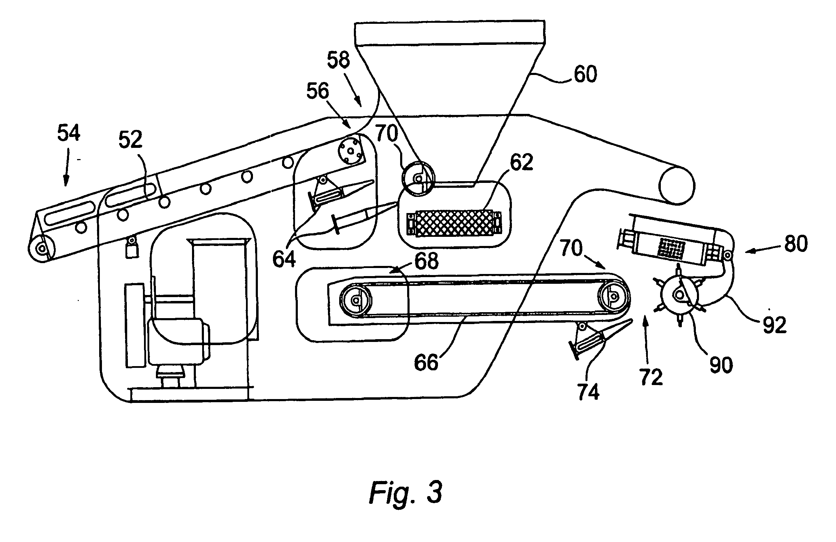

Parts of the waste separation process of Figures 1a and 2 are shown in Figure 3. Figure 3 shows a combined apparatus for separating fractions of a waste material stream. The apparatus comprises a first conveyer 52 generally comprising a conveyer belt passing around two end rollers and a number of intermediate rollers so as to convey a waste material stream from an inlet end 54 to an outlet end 56 after which is a first separating region 58.

Located in and around the first separating region 58 are a number of items, including a vacuum cyclone chamber 60, a third conveyer 62, two first air blowers 64 and a second conveyer 66.

The vacuum cyclone chamber 60 is preferably placed directly above the second conveyer 66 and has an apparatus, unit or device (not shown) able to provide a vacuum to create an air stream passing upwardly through the vacuum cyclone chamber 60 so as to increase separation of lighter components of the waste material stream up through the vacuum cyclone chamber 60 as a first exit route for at least one first light fraction of the waste material stream.

The third conveyer 62 is located between the outlet end 56 of the first conveyer 52 and the second conveyer 66, so as to receive and remove a fraction of the waste material stream to a separate location, said fraction comprising waste material being lighter than the first heavy fraction that passes through the first separating region 58 towards an inlet end 68 of the second conveyer 66, and heavier than the first light fraction passing up through the vacuum cyclone chamber 60. The third conveyor 62 may be at any angle relative to the first and second conveyors 52, 66, including being transverse as shown in Figure 3, and in line with the first and second conveyors 52, 66.

The first separating region 58 may also include a first revolving drum 70 placed vertically and horizontally to collect lower density materials. The first revolving drum 70 may have projections fitted to aid separation.

The first heavy fraction of the waste material stream that lands on the inlet end 68 of the second conveyer 66 is conveyed by the conveyer belt of the second conveyer 66 to an outlet end 70 after which is a second separating region 72. The variations in materials and densities of material on the second conveyor 66 is now much narrower than that on the first conveyor 66, requiring greater effort to further separate the different fractions or materials.

Connected to the underside of the apparatus of the second conveyer 66 is a second air blower 74 having an outlet nozzle able to direct an air stream through the second separating region 72 towards a suction means to increase the separation of lighter components of the first heavy fraction of the waste material stream on the second conveyer 66 away from other components of the waste material stream passing through the second separating region 72. In this way, the air blower 74 is able to increase the proportion of lighter components of the waste material stream at the end of the second conveyer 66 to be collected by a suitable collector.

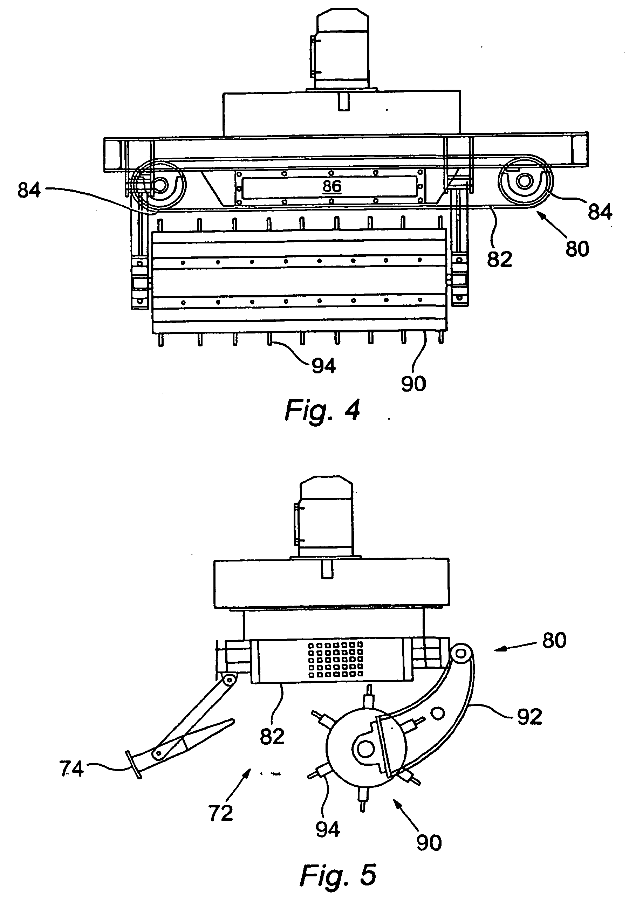

One suitable suction means is a fourth vacuum conveyer 80 shown in more detail in Figures 4 and 5. In Figure 3-5 , the fourth conveyer comprises a belt 82 formed of a perforated medium, revolving around two end rollers 84 and having an air displacement device 86 located within the belt 82. The air displacement device 86 causes a suction effect through the perforated belt 82 to increase the attraction of the lighter components in the waste material stream provided at the end of the second conveyer towards the fourth conveyer 80.

In addition, a revolving drum 90 is attached via a suitable arm 92 to be located within or in close proximity to the second separating region 72, generally at a location lower than or beneath the fourth conveyer 80 or at least the conveyer belt 82 of the fourth conveyer 80. The fourth conveyor 80 may be at any angle relative to the second conveyor 66, including being transverse as shown in Figures 3-5, and in line with the second conveyor 66.

The gap between the drum 90 and the end of the second conveyor 66 can be set as the definition of the desired grade of the heavy product stream, e.g. having a maximum size of 50mm or 60mm, etc, as desired by the operator.

The revolving drum 90 may comprise a number of radial projections 94 designed to increase and/or encourage lighter components of the waste material stream at the end of the second conveyer 70 to go over the drum 90 towards a separate collector.

Thus, the first heavy fraction provided to the outlet end 70 of the second conveyer 66 can be met by a combination of the air stream from the air blower 74, the suction effect provided by the air displacement device 86, and the projections 94 of the revolving drum 90, to create in the second separating region 72, a combined effect for increasing and encouraging lighter components and lower density materials in the first heavy fraction to be uplifted and directed over the drum 90 as a second mediums stream 24 as discussed above

Meanwhile, the heavier components of the first heavy fraction pass through the second separating region 72 and fall under gravity as a final heavies stream 22 towards one or more further collectors, units, processes, etc (not shown in Figure 5).

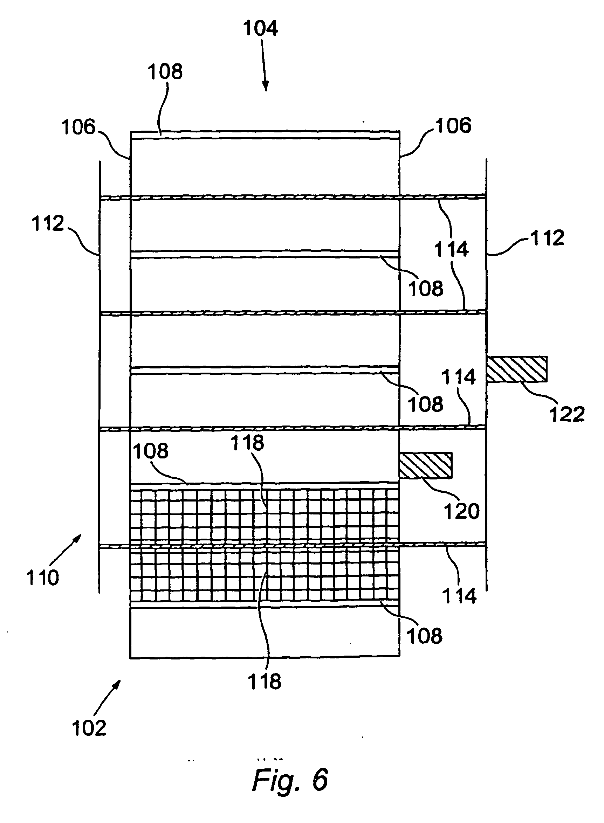

Figure 6 shows a first screening apparatus 102 comprising a first screen frame 104 having two sides 106, and five first cross members 108 between the two sides 106. The two ends of the first screen frame 104 may also comprise first cross members, and/or cross members particularly adapted for the entry and exit regions of the screening apparatus 102.

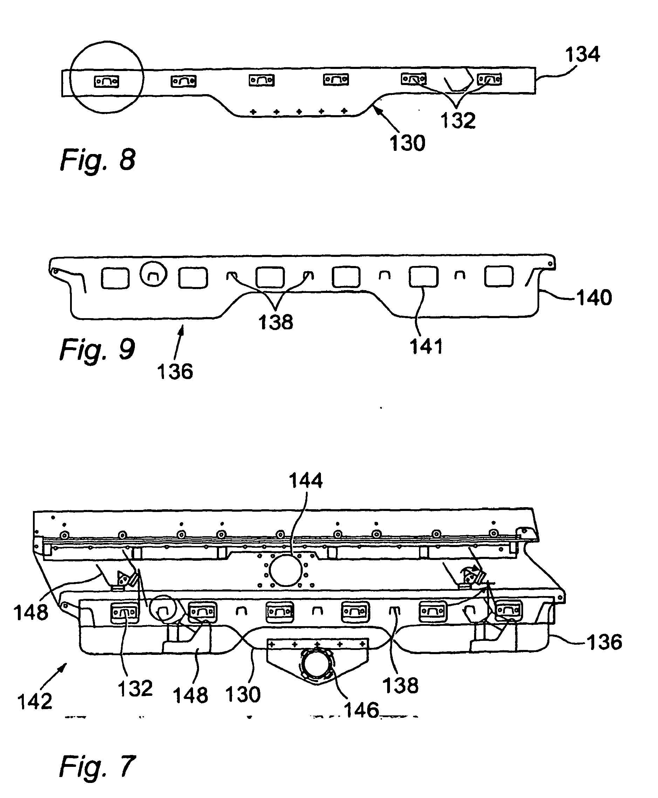

The screening apparatus 102 also comprises a second screen frame 110 comprising two sides 112 and four second cross members 114 thereinbetween. As shown more particularly in relation to the second screening apparatus shown in Figures 7-9, the first screen frame 104 includes a series of apertures in each side 106 to allow the passage of the second cross members 114 therethrough.

In the first screening apparatus 102 in Figure 6, the first cross members 108 and second cross members 114 are laterally interspaced, generally being in the same plane, but not rigidly adhered thereto. The first cross members 108 have movement independent of the movement of the second cross members 114, which movement may by lateral, vertically (in relation to the general side view of the screening apparatus), or both.

Figure 6 shows two flexible screen mats 118 from each side of a second cross member 114 to two adjacent first cross members 108. The two flexible screen mats 118 are shown by way of example only, and further flexible screen mats are located between the other first and second cross members 108, 114 in a similar arrangement, but not shown in Figure 9 for clarity purposes.

Figure 6 also shows a first driver 120 directly coupled to the first screen frame 104, and a second driver 122 coupled to the second screen frame 110.

The example of the first screening apparatus 102 shown in Figure 6 is not limited by the number of first and second cross members, the arrangement of the first and second screen frames, and the location or coupling of the first and second drivers to the first and second screen frames.

Figure 8 shows a second screen frame 130 comprising six second cross members 132 arranged along one side 134 of the second screen frame 130.

Figure 9 shows a first screen frame 136 of a second screening apparatus, comprising five parallel first cross members 138 and six apertures 141 arranged in series along one side 140 of the first screen frame 136.

Figure 7 shows the combination of the first screen frame 136 of Figure 8 and the second screen frame 130 of Figure 9 as part of a second screening apparatus 142. The second cross members 132 are shown to be located through the apertures 141 in the side 140 of the first screen frame 136, in such a way that the first and second cross members 132, 138 are laterally interspaced along the second screening apparatus 142.

Figure 7 also shows a first driver 144 able to cause the first screen frame 140 to oscillate, and a second driver 146 able to cause the second screen frame 130 to independently oscillate, generally at a different rate or frequency or amplitude or a combination of same. Because the flexible screen mats (not shown in Figure 6) are fixed between the first and second cross members 132, 138, the motion of the flexible screen mats is a result of the different motions of the first cross members 138 compared with the second cross members 132.

Figure 7 also shows two dampeners 148 adapted to interrelate some the motion of the first screen frame 136 and/or the second screen frame 130.

The eccentric action of the first and/or second drivers on the first and/or second frames can comprise one or more unbalanced drives, either single or otherwise, which when revolved or rotated makes the screen sides oscillate. The unbalanced drives can consist of opposite offset weights or by means of an unbalanced or offset shaft located through the sides. The first and second drivers are driven asynchronously, so as to increase the unrythmic movement of the flexible mats, so as to prevent as far as possible the clogging of the mats by material that might remain in the apertures of the mats. That is, the eccentric flippings and motions of the mats cause more release of material otherwise settling in the mat apertures.

## Claims

1. A screening apparatus comprising:
(a) a first screen frame 104 comprising at least two sides and a plurality of first cross members 108 thereinbetween;
(b) a second screen frame 110 comprising at least two sides and a plurality of second cross members 114 thereinbetween, the second cross of second cross members 114 thereinbetween, the second cross members 114 being laterally interspaced with the first cross members 110,
(c) a plurality of flexible screen mats 118 located between at least some of the first cross members 108 and adjacent second cross members 114;
(d) a first driver 120 to cause the first screen frame 104 to oscillate; and
(e) a second driver 122 to cause the second screen frame 110 to oscillate;
wherein the second driver 122 is independent to the first driver 120, and the first driver is asynchronous with the second driver.

2. A screening apparatus as claimed in claim 1 further comprising one or more first biasers of the movement of the first screen frame by the first driver.

3. A screening apparatus as claimed in claim 2 wherein at least one of the first biasers provides eccentric movement to the first screen frame, or at least one of the first biasers is adjustable, or both.

4. A screening apparatus as claimed in any one of the preceding claims further comprising one or more second biasers of the movement of the second screen frame by the second driver.

5. A screening apparatus as claimed in claim 4 wherein at least one of the second biasers provides eccentric movement to the second screen frame, or at least one of the second biasers is adjustable, or both.

6. A screening apparatus as claimed in any one of the preceding claims wherein the first driver is directly coupled to the first screen frame, or the second driver is directly coupled to the second screen frame, or both.

7. A screening apparatus as claimed in any one of the preceding claims wherein the first driver provides a different drive action to the first screen frame than the second driver provides to the second screen frame.

8. A screening apparatus as claimed in any one of the preceding claims in combination with apparatus for separating fractions of a waste material stream, said apparatus for separating fractions comprising;
(i) a first conveyer for conveying the waste material stream from an inlet region to a first separating region;
(ii) a second conveyer for conveying a first heavy fraction of the waste material stream from the first separating region to a second separating region; and
(iii) at least one blower for passing an air stream through said second separating region to increase the separation of lighter components of the first heavy fraction of the waste material stream on the second conveyer passing towards a second light fraction collector.

9. A method of screening material such as waste material using a screening apparatus as defined in any one of claims 1-8 to provide a first screened fraction and a second non-screened fraction, comprising at least the steps of:
(i) operating the first driver of the first screen frame to oscillate the first screen frame;
(ii) operating the second driver to oscillate the second screen frame; and
(iii) conveying a material stream across the flexible screen mats to provide a first screened fraction and a second non-screened fraction.

## Patentansprüche

1. Eine Siebevorrichtung, die Folgendes beinhaltet:
(a) einen ersten Siebrahmen 104, der mindestens zwei Seiten und dazwischen eine Vielzahl von ersten Querelementen 108 beinhaltet;
(b) einen zweiten Siebrahmen 110, der mindestens zwei Seiten und dazwischen eine Vielzahl von zweiten Querelementen 114 beinhaltet, wobei die zweiten Querelemente 114 von den ersten Querelementen 110 lateral mit Abstand angeordnet sind;
(c) eine Vielzahl von flexiblen Siebmatten 118, die zumindest zwischen manchen der ersten Querelemente 108 und benachbarten zweiten Querelementen 114 eingerichtet sind;
(d) einen ersten Antreiber 120, um das Oszillieren des ersten Siebrahmens 104 zu bewirken; und
(e) einen zweiten Antreiber 122, um das Oszillieren des zweiten Siebrahmens 110 zu bewirken;
wobei der zweite Antreiber 122 von dem ersten Antreiber 120 unabhängig ist und der erste Antreiber mit dem zweiten Antreiber asynchron ist.

2. Siebevorrichtung gemäß Anspruch 1, die ferner einen oder mehrere erste Versteller der Bewegung des ersten Siebrahmens durch den ersten Antreiber beinhaltet.

3. Siebevorrichtung gemäß Anspruch 2, wobei mindestens einer der ersten Versteller dem ersten Siebrahmen exzentrische Bewegung bereitstellt oder mindestens einer der ersten Versteller einstellbar ist oder beides.

4. Siebevorrichtung gemäß einem der vorhergehenden Ansprüche, die ferner einen oder mehrere zweite Versteller der Bewegung des zweiten Siebrahmens durch den zweiten Antreiber beinhaltet.

5. Siebevorrichtung gemäß Anspruch 4, wobei mindestens einer der zweiten Versteller dem zweiten Siebrahmen exzentrische Bewegung bereitstellt oder mindestens einer der zweiten Versteller einstellbar ist oder beides.

6. Siebevorrichtung gemäß einem der vorhergehenden Ansprüche, wobei der erste Antreiber direkt an den ersten Siebrahmen gekoppelt ist oder der zweite Antreiber direkt an den zweiten Siebrahmen gekoppelt ist oder beides.

7. Siebevorrichtung gemäß einem der vorhergehenden Ansprüche, wobei der erste Antreiber dem ersten Siebrahmen eine andere Antriebsaktion bereitstellt als der zweite Antreiber dem zweiten Siebrahmen bereitstellt.

8. Siebevorrichtung gemäß einem der vorhergehenden Ansprüche in Kombination mit einer Vorrichtung zum Trennen von Teilen eines Abfallmaterialstroms, wobei die Vorrichtung zum Trennen der Teile Folgendes beinhaltet:
(i) eine erste Förderanlage zum Befördern des Abfallmaterialstroms von einem Einlassbereich zu einem ersten Trennbereich;
(ii) eine zweite Förderanlage zum Befördern eines ersten schweren Teils des Abfallmaterialstroms von dem ersten Trennbereich zu einem zweiten Trennbereich; und
(iii) mindestens einen Bläser zum Führen eines Luftstroms durch den zweiten Trennbereich, um die Trennung leichterer Komponenten des ersten schweren Teils des Abfallmaterialstroms auf der zweiten Förderanlage, die zu einem zweiten Leichtteilsammler geführt werden, zu erhöhen.

9. Ein Verfahren zum Sieben von Material wie etwa Abfallmaterial unter Verwendung einer Siebevorrichtung gemäß einem der Ansprüche 1-8, um einen ersten gesiebten Teil und einen zweiten, nicht gesiebten Teil bereitzustellen, das mindestens die folgenden Schritte beinhaltet:
(i) Betreiben des ersten Antreibers des ersten Siebrahmens zum Oszillieren des ersten Siebrahmens;
(ii) Betreiben des zweiten Antreibers zum Oszillieren des zweiten Siebrahmens; und
(iii) Befördern eines Materialstroms über die flexiblen Siebmatten zum Bereitstellen eines ersten gesiebten Teils und eines zweiten, nicht gesiebten Teils.

## Revendications

1. Un appareil de triage comprenant :
(a) un premier cadre de tri 104 comprenant au moins deux côtés et une pluralité de premiers éléments transversaux 108 entre ceux-ci ;
(b) un deuxième cadre de tri 110 comprenant au moins deux côtés et une pluralité de deuxièmes éléments transversaux 114 entre ceux-ci, les deuxièmes éléments transversaux 114 étant latéralement intercalés dans les premiers éléments transversaux 110 ;
(c) une pluralité de tapis de tri souples 118 situés entre au moins certains des premiers éléments transversaux 108 et des deuxièmes éléments transversaux adjacents 114 ;
(d) un premier organe d'entraînement 120 pour amener le premier cadre de tri 104 à osciller ; et
(e) un deuxième organe d'entraînement 122 pour amener le deuxième cadre de tri 110 à osciller ;
dans lequel le deuxième organe d'entraînement 122 est indépendant par rapport au premier organe d'entraînement 120, et le premier organe d'entraînement est asynchrone avec le deuxième organe d'entraînement.

2. Un appareil de triage tel que revendiqué dans la revendication 1 comprenant en outre un ou plusieurs premiers organes de décalage du déplacement du premier cadre de tri par le premier organe d'entraînement.

3. Un appareil de triage tel que revendiqué dans la revendication 2 dans lequel au moins l'un des premiers organes de décalage fournit un déplacement excentrique au premier cadre de tri, ou au moins l'un des premiers organes de décalage est ajustable, ou les deux.

4. Un appareil de triage tel que revendiqué dans une quelconque des revendications précédentes comprenant en outre un ou plusieurs deuxièmes organes de décalage du déplacement du deuxième cadre de tri par le deuxième organe d'entraînement.

5. Un appareil de triage tel que revendiqué dans la revendication 4 dans lequel au moins l'un des deuxièmes organes de décalage fournit un déplacement excentrique au deuxième cadre de tri, ou au moins l'un des deuxièmes organes de décalage est ajustable, ou les deux.

6. Un appareil de triage tel que revendiqué dans une quelconque des revendications précédentes dans lequel le premier organe d'entraînement est directement couplé au premier cadre de tri, ou le deuxième organe d'entraînement est directement couplé au deuxième cadre de tri, ou les deux.

7. Un appareil de triage tel que revendiqué dans une quelconque des revendications précédentes dans lequel le premier organe d'entraînement fournit au premier cadre de tri une action d'entraînement différente de celle fournie par le deuxième organe d'entraînement au deuxième cadre de tri.

8. Un appareil de triage tel que revendiqué dans une quelconque des revendications précédentes en combinaison avec un appareil destiné à séparer des fractions d'un flux de déchets, ledit appareil destiné à séparer des fractions comprenant :
(i) un premier transporteur destiné à transporter le flux de déchets d'une région d'entrée à une première région de séparation ;
(ii) un deuxième transporteur destiné à transporter une première fraction lourde du flux de déchets de la première région de séparation à une deuxième région de séparation ; et
(iii) au moins une souffleuse destinée à faire passer un flux d'air à travers ladite deuxième région de séparation pour augmenter la séparation de composants plus légers de la première fraction lourde du flux de déchets sur le deuxième transporteur passant vers un deuxième collecteur de fraction légère.

9. Un procédé de triage de matériau tel que des déchets à l'aide d'un appareil de triage tel que défini dans une quelconque des revendications 1 à 8 pour fournir une première fraction triée et une deuxième fraction non triée, comprenant au moins les étapes de :
(i) faire fonctionner le premier organe d'entraînement du premier cadre de tri pour faire osciller le premier cadre de tri ;
(ii) faire fonctionner le deuxième organe d'entraînement pour faire osciller le deuxième cadre de tri ; et
(iii) transporter un flux de matériau sur les tapis de tri souples pour fournir une première fraction triée et une deuxième fraction non triée.
